# EUROPÄISCHE PATENTSCHRIFT

(11) **EP 3 717 384 B1**
(45) Veröffentlichungstag und Bekanntmachung des Hinweises auf die Patenterteilung: **09.08.2023**
(21) Anmeldenummer: 18807940.4
(22) Anmeldetag: 21.11.2018
(51) Int. Cl.: B65G 45/02, B25J 5/00, B25J 19/02

(54) **TRANSPORTANLAGE FÜR BEHÄLTER IN DER GETRÄNKEINDUSTRIE UND SCHMIERVERFAHREN**
TRANSPORT SYSTEM FOR CONTAINERS IN THE BEVERAGE INDUSTRY AND LUBRICATION METHOD
INSTALLATION DE TRANSPORT DE RÉCIPIENTS DANS L'INDUSTRIE DES BOISSONS, ET PROCÉDÉ DE LUBRIFICATION

(30) Priorität: 29.11.2017 DE 102017221397
(43) Veröffentlichungstag der Anmeldung: 07.10.2020
(73) Patentinhaber: KRONES AG, 93073 Neutraubling (DE)
(72) Erfinder: MEIER, Matthias, Neutraubling 93073 (DE)
(74) Vertreter: Grünecker Patent- und Rechtsanwälte PartG mbB
(86) Internationale Anmeldenummer: PCT/EP2018/082032
(87) Internationale Veröffentlichungsnummer: WO 2019/105820

(56) Entgegenhaltungen:
- WO-A1-2017/033380
- CN-A- 105 214 876
- DE-A1-102014 105 894
- JP-A- H10 221 239
- JP-A- H11 246 029
- JP-A- 2010 047 397

## Beschreibung

Die Erfindung betrifft eine Transportanlage für Behälter in der Getränkeindustrie mit den Merkmalen des Oberbegriffs von Anspruch 1 und ein Schmierverfahren dafür mit den Merkmalen des Oberbegriffs von Anspruch 8.

Üblicherweise werden Transportanlagen für Behälter in der Getränkeindustrie dazu eingesetzt, die Behälter zwischen den Behälterbehandlungsmaschinen unter anderem mittels Behältertransporteuren zu transportieren.

Derartige Behältertransporteure umfassen Förderbänder, auf denen die Behälter stehend transportiert werden. An bestimmten Bereichen der Transportanlage werden die Behälter im Bereich der Förderbänder zusätzlich von Führungselementen geführt, um sie beispielsweise von einem breiten auf einen schmalen Behälterstrom zu vereinzeln. Ebenso denkbar ist, dass die Behälter mit Führungselementen um eine Kurve herum geführt werden. Allerdings müssen dazu die Behälter auf den Förderbändern rutschen, da sie durch die Führungselemente auch quer zur Förderrichtung verschoben werden. Folglich ist es also wünschenswert, dass die Förderbänder einen definierten Reibwert aufweisen, da ansonsten die Behälter durch die Führungselemente auch gelegentlich umgekippt werden.

Um den Reibwert auf einem geeigneten Wert zu halten, ist bekannt, an den Transporteur feste Applikatoren mit Düsen zu installieren, welche das Schmiermittel in geeigneten Intervallen auf dem Förderband auftragen. Nachteilig dabei ist, dass die Applikatoren fest verrohrt oder verschlaucht werden müssen, was eine aufwändige Installation und Inbetriebnahme des Schmiersystems nach sich zieht. Darüber hinaus wird das Schmiermittel ohne Kontrolle des tatsächlichen Bedarfs auf allen Bereichen des Förderbands gleichermaßen aufgetragen und es erfolgt keine Kontrolle des Reibwerts bzw. der Dosierung, solange der Behältertransporteur ordnungsgemäß arbeitet. Folglich kann es also in selten Fällen vorkommen, dass die Behälter nicht zuverlässig transportiert werden und umfallen oder umgekehrt, dass das Förderband übermäßig geschmiert wird.

Aufgabe der vorliegenden Erfindung ist es daher, eine Transportanlage für Behälter in der Getränkeindustrie bereitzustellen, mit dem eine weniger aufwändige und dennoch zuverlässigere Schmierung der Transportbänder von Behältertransporteuren möglich ist.

Die DE 10 2014 105894A1 offenbart eine Transportanlage nach dem Oberbegriff des Anspruchs 1 und eir Schmierverfahren nach dem Oberbegriff des Anspruchs 8.

Zur Lösung dieser Aufgabenstellung stellt die Erfindung eine Transportanlage mit den Merkmalen des Anspruchs 1 bereit. Vorteilhafte Ausführungsformen sind in den Unteransprüchen genannt.

Dadurch, dass das Schmiersystem den mobilen Roboter mit dem daran angeordneten Applikator und mit dem bodengestützten Fahrwerk umfasst, kann der mobile Roboter auf dem Boden der Anlage an beliebige Positionen verfahren werden, um mit dem Applikator die Förderbänder mehrerer Behältertransporteure zuverlässig zu schmieren. Darüber hinaus kann der mobile Roboter beliebig automatisiert werden, um autonom zu den Behältertransporteuren zu verfahren und mit dem daran angeordneten Applikator das Schmiermittel auf die Förderbänder zu verteilen. Folglich erfordert das Schmiersystem mit dem mobilen Roboter keinen Benutzereingriff, um die Schmierung vorzunehmen und ist damit weniger aufwändig.

Die Transportanlage kann in einer Getränkeverarbeitungsanlage angeordnet sein. Die Transportanlage kann einer Behälterherstellungsanlage (beispielsweise einer Streckblasmaschine), einem Rinser, einer Sortiermaschine, einer Leerflascheninspektionsmaschine, einer Vollflascheninspektionsmaschine, einem Füller, einem Verschließer und/oder einer Verpackungsmaschine zugeordnet sein. Vorzugsweise können die Behältertransporteure der Transportanlage dazu vorgesehen sein, die Behälter zwischen den vorgenannten Einheiten zu transportieren. Beispielsweise können der erste Behältertransporteur zwischen dem Rinser und dem Füller und der zweite Behältertransporteur zwischen dem Füller und dem Verschließer angeordnet sein. Ein weiteres Beispiel wäre eine Anordnung zwischen einem Füller mit nachgelagertem Verschließer und einer Etikettiermaschine. Generell ist eine Anordnung der Transportanlage zwischen allen bekannten Teilen einer Getränkeverarbeitungsanlage denkbar.

Die Behälter können dazu vorgesehen sein, Getränke, Nahrungsmittel, Hygieneartikel, Pasten, chemische, biologische und/oder pharmazeutische Produkte aufzunehmen. Die Behälter können Kunststoffflaschen, Glasflaschen, Dosen und/oder Tuben sein. Bei Kunststoffbehältern kann es sich im speziellen um PET-, PEN-, HD-PE- oder PP-Behälter bzw. Flaschen handeln. Ebenso kann es sich um biologisch abbaubare Behälter oder Flaschen handeln, deren Hauptbestandteile aus nachwachsenden Rohstoffen wie zum Beispiel Zuckerrohr, Weizen oder Mais bestehen. Die Behälter können jeweils einen Verschlusskopf umfassen.

Bei den Förderbändern des ersten und/oder zweiten Behältertransporteurs kann es sich um Gliederbandketten oder flexible Kunststoffbänder handeln. Das Förderband des zweiten Behältertransporteurs kann einen unterschiedlichen Bandtyp als das Förderband des ersten Behältertransporteurs aufweisen. Der erste und/oder zweite Behältertransporteur kann Antriebs- und/oder Umlenkrollen umfassen, um das Förderband anzutreiben und/oder zu führen.

Bei dem Schmiermittel kann es sich vorzugsweise um ein Trockenschmiermittel handeln. Insbesondere kann es sich dabei um ein MoS2 oder PTFE-Schmiermittel handeln. Unter Trockenschmiermittel versteht man generell Schmiermittel, die ohne zusätzlichen Einsatz von Wasser Verwendung finden. Das Schmiermittel wird demnach "pur" aufgetragen und nicht zuvor verdünnt.

Das bodengestützte Fahrwerk des mobilen Roboters kann lenkbar ausgeführt sein, um entlang von gekrümmten Bewegungsbahnen auf einem Boden zu fahren. Mit "bodengestützten Fahrwerk" kann hier gemeint sein, dass das Fahrwerk direkt auf einem Boden fährt, auf der die Transportanlage und/oder die Getränkeverarbeitungsanlage installiert ist. Das bodengestützte Fahrwerk kann insbesondere Räder, Rollen, Gleis- und/oder Raupenketten umfassen. Auch kann unter "bodengestützt" eine Abstützung mittels unter Druck stehender Luft ("Luftkissen") verstanden werden. Vorzugsweise kann es sich bei dem Boden um einen Gebäudeboden handeln.

Der mobile Roboter kann eine Steuerungseinheit umfassen, um das bodengestützten Fahrwerk, einen nachfolgend beschriebenen Knickarm, die weiter unten beschriebene Reibwertmessvorrichtung und/oder den Applikator zu steuern. Bei der Steuerungseinheit kann es sich beispielsweise um eine Maschinensteuerung handeln. Die Steuerungseinheit kann eine CPU, eine Sprecheinheit, eine Datenschnittstelle, eine Eingabeeinheit (beispielsweise eine Tastatur) und/oder eine Ausgabeeinheit (beispielsweise einen Bildschirm) umfassen. Der mobile Roboter kann dazu ausgebildet sein, sich aufgrund einer Arbeitsvorschrift in der Transportanlage autonom zu bewegen. Ebenso kann der mobile Roboter dazu ausgebildet sein, den Applikator und/oder den Knickarm aufgrund der Arbeitsvorschrift autonom zum Aufbringen des Schmiermittels zu verfahren. Mit "Arbeitsvorschrift" können hier beispielsweise Intervalle zum Aufbringen des Schmiermittels, eine Anordnung des ersten und zweiten Behältertransporteurs und/oder Bewegungsbahnen für den mobilen Roboter auf dem Boden gemeint sein.

Der mobile Roboter kann für den Applikator den steuerbaren Knickarm umfassen, um den Applikator gegenüber dem ersten und zweiten Behältertransporteur in unterschiedliche Applikationsrichtungen und/oder -positionen zu bewegen. Dadurch kann die Position und Ausrichtung des Applikators besonders flexibel an die Anordnung der Förderbänder angepasst werden. Mit "steuerbarem Knickarm" kann hier ein Arm mit wenigstens einem steuerbaren Gelenk oder ein Roboterarm gemeint sein. Mit dem wenigstens einen steuerbaren Gelenk kann wenigstens ein Gelenk gemeint sein, das mittels wenigstens eines Aktuator, insbesondere eines Elektromotors oder einer Hydraulikeinheit aufgrund von Steuersignalen verstellbar ist. Vorzugsweise kann der steuerbare Knickarm sechs steuerbare Gelenke umfassen, um den Applikator in beliebige Applikationsrichtungen und -positionen zu verfahren. Beispielsweise kann es sich bei dem mobilen Roboter mit dem steuerbaren Knickarm um ein System vom Typ KUKA KMR iiwa handeln. Der steuerbare Knickarm kann mit der Steuerungseinheit verbunden sein, um die Applikationsrichtungen und/oder -positionen anzufahren.

Der Applikator kann wenigstens eine Düse umfassen, um das Schmiermittel auf den Förderbändern des ersten und zweiten Behältertransporteurs zu verteilen. Dadurch kann das Schmiermittel besonders homogen auf die Förderbänder aufgetragen werden. Die Auftragung durch den Applikator erfolgt dabei vorzugsweise an der stromaufwärts gelegenen Umlenkung der Förderbänder, insbesondere in einem Bereich, der durch Behälter nicht erreicht werden kann, beispielsweise, wenn der Bereich durch ein vom Förderband in vertikaler Richtung beabstandetes Geländer von diesem Bereich ferngehalten wird. Dies verhindert, dass der Knickarm die Behälter berührt und somit negativ beeinflussen könnte (Umkippen, Beschädigungen, ...). Zusätzlich zu der Düse kann der Applikator eine Bürste umfassen, um das Schmiermittel auf das Förderband aufzutragen. In diesem Fall dient die Düse zur Dosierung des Schmiermittels.

Das Schmiermittelsystem kann einen Versorgungstank und oder eine Förderpumpe für das Schmiermittel umfassen, die am mobilen Roboter angeordnet sind. Dadurch kann ein besonders großer Schmiermittelvorrat mit dem mobilen Roboter mitgeführt werden.

Das Schmiersystem kann eine am mobilen Roboter angeordnete Reibwertmessvorrichtung umfassen, um einen Reibwert der Förderbänder des ersten und zweiten Behältertransporteurs zu erfassen. Dadurch können zunächst die Reibwerte der Förderbänder gemessen und nur bei Bedarf das Schmiermittel aufgebracht werden, wodurch das Schmiersystem besonders zuverlässig ist. Vorzugsweise kann das Aufbringen des Schmiermittels erst dann erfolgen, wenn die Förderbänder jeweils einen Soll-Reibwert von 0,15, vorzugsweise von 0,1, weiterhin vorzugsweise von 0,08 überschreiten. Bei dem Reibwert kann es sich um ein Verhältnis aus einer Reibkraft eines auf dem Förderband stehenden und längs der Förderrichtung festgehaltenen Behälters und eine Gewichtskraft des Behälters handeln. Bei der Reibkraft kann es sich um eine Kraft längs der Förderrichtung handeln, die das laufende Förderband beim Festhalten des Behälters auf den Behälterboden ausübt.

Die Reibwertmessvorrichtung kann ein Kontaktelement umfassen, das an dem steuerbaren Knickarm angeordnet ist, wobei der steuerbare Knickarm und/oder die Reibwertmessvorrichtung dazu ausgebildet ist, das Kontaktelement mit einer vordefinierten Kraft jeweils gegen die Förderbänder des ersten und zweiten Behältertransporteurs zu drücken. Dadurch kann der Reibwert besonders einfach erfasst werden. Gemeint ist hier, dass das Kontaktelement mittels des Knickarms und/oder durch ein Verfahren des mobilen Roboters wahlweise gegen das Förderband des ersten Behältertransporteurs oder gegen das Förderband des zweiten Behältertransporteurs gedrückt werden kann. Das Kontaktelement der Reibwertmessvorrichtung kann auch mehrmals hintereinander in Abständen von wenigen Sekunden auf das jeweilige Förderband gedrückt werden, um anschließend einen Durchschnittswert aus den mindestens zwei Messungen zu errechnen.

Die Reibwertmessvorrichtung kann mit einer Datenbank verbunden sein, um Soll-Reibwerte verschiedener Behältertypen abzurufen und/oder um auf Basis von ähnlichen Behältertypen den Soll-Reibwert zu ermitteln. Dadurch können besonders günstige Soll-Reibwerte für die unterschiedlichen Behältertypen aus der Datenbank abgefragt werden, um darauf basierend das Schmiermittel aufzubringen.

Der mobile Roboter kann eine Reinigungseinrichtung umfassen. Hierbei können Reibwertmessvorrichtung, Schmiermittelapplikator sowie Reinigungseinrichtung in jeder Abfolge nacheinander zum Einsatz kommen. Auch ist es denkbar, dass zunächst der Reibwert gemessen wird, anschließend gereinigt wird, dann Schmiermittel aufgetragen wird und anschließend noch einmal der Reibwert gemessen wird. Die Reinigung erfolgt bevorzugt durch ein unter Druck stehendes Fluid wie z. B. Druckluft oder Wasser (ggf. mit Zusatz eines Reinigungsmittels). Es ist jedoch auch denkbar, dass die Reinigungseinrichtung in direkten mechanischen Kontakt mit der Oberfläche des Transporteurs gebracht wird.

Darüber hinaus stellt Erfindung mit dem Anspruch 8 zur Lösung der Aufgabenstellung ein Schmierverfahren für eine Transportanlage für Behälter in der Getränkeindustrie bereit. Vorteilhafte Ausführungsformen sind in den Unteransprüchen genannt.

Dadurch, dass der Applikator durch den mobilen Roboter mittels des bodengestützten Fahrwerks automatisiert vom ersten Behältertransporteur zum zweiten Behältertransporteur verfahren wird, kann der Applikator dazu eingesetzt werden, Förderbänder mehrerer Behältertransporteure zuverlässig zu schmieren. Darüber hinaus kann der mobile Roboter beliebig automatisiert werden, um autonom zu den Behältertransporteuren zu fahren und mit dem daran angeordneten Applikator das Schmiermittel auf die Förderbänder zu verteilen. Folglich erfordert das Schmierverfahren mit dem mobilen Roboter keinen Benutzereingriff, um die Schmierung vorzunehmen und ist damit besonders wenig aufwändig.

Bei dem Schmierverfahren kann eine Applikationsrichtung und/oder -position des Applikators mit einem steuerbaren Knickarm verändert werden. Dadurch kann der Applikator besonders gut zur Schmierung der Förderbänder des ersten und zweiten Behältertransporteurs ausgerichtet und dadurch flexibel eingesetzt werden.

Bei dem Schmierverfahren kann ein Kontaktelement einer Reibwertmessvorrichtung mit einer vordefinierten Kraft gegen das Förderband des ersten Behältertransporteurs und/oder gegen das Förderband des zweiten Behältertransporteurs gedrückt werden und damit wenigstens ein Reibwert für den ersten und/oder zweiten Behältertransporteur bestimmt werden, wobei darauf basierend bestimmt wird, ob und/oder wann die Schmierung des ersten und/oder zweiten Behältertransporteurs notwendig ist. Dadurch kann die Schmierung auf das notwendige Maß reduziert werden, so dass ein übermäßiger Schmiermittelverbrauch vermieden wird.

Denkbar ist, dass mit dem Kontaktelement Reibwerte für das Förderband des ersten Behältertransporteurs und/oder des zweiten Behältertransporteurs abschnittsweise bestimmt werden, wobei abhängig davon das Schmiermittel durch den Applikator mit abschnittsweise unterschiedlicher Dosierung auf das Förderband des ersten Behältertransporteurs und/oder des zweiten Behältertransporteurs aufgebracht wird. Dadurch erfolgt eine besonders homogene Verteilung des Schmiermittels auf den Förderbändern. Unter "abschnittsweise" wird hierbei bevorzugt die Unterteilung des jeweiligen Förderbandes in Abschnitte quer zur Transportrichtung verstanden.

Weitere Merkmale und Vorteile Erfindung werden nachfolgend anhand dem in der Figur dargestellten Ausführungsbeispiels näher erläutert. Dabei zeigt:

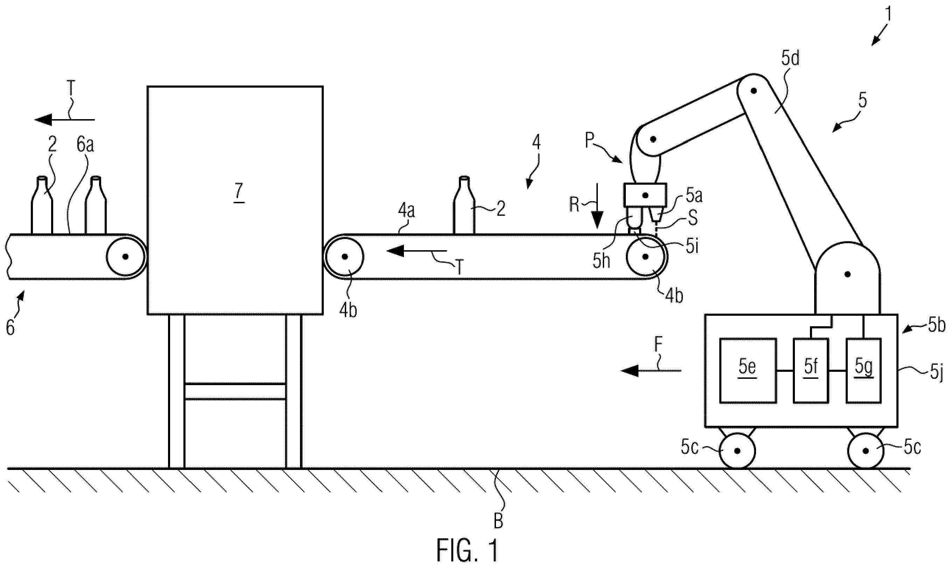

- Figur 1: ein Ausführungsbeispiel einer erfindungsgemäßen Transportanlage für Behälter in der Getränkeindustrie.

In der Figur 1 ist ein Ausführungsbeispiel einer erfindungsgemäßen Transportanlage 1 für Behälter 2 in der Getränkeindustrie dargestellt. Zu sehen ist, dass die Behälter 2 von rechts kommend mit dem ersten Behältertransporteur 4 zur Behälterbehandlungsmaschine 7 transportiert werden, beispielsweise zu einem Füller mit Verschließer. Dort werden sie in diesem Beispiel mit einem Produkt befüllt und anschließend über den zweiten Behältertransporteur 6 in der Transportrichtung T zur weiteren Behälterbehandlungsmaschinen weitertransportiert, beispielsweise zu einer Etikettiermaschine.

Der erste Behältertransporteur 4 umfasst das Förderband 4a, das hier beispielsweise als Gliederbandkette ausgeführt ist und über die beiden Rollen 4b umläuft. Eine der beiden Rollen 4b ist angetrieben, um die Transportbewegung T auf das Förderband 4a aufzubringen.

Des Weiteren ist der zweite Behältertransporteur 6 zu sehen, der in diesem Ausführungsbeispiel baugleich mit dem Behältertransporteur 4 ist und ebenfalls ein als Gliederbandkette ausgebildetes Förderband 6a aufweist. Denkbar ist jedoch auch, dass der zweite Behältertransporteur anders aufgebaut ist und mit einem anderen Förderbandtyp ausgebildet ist.

Um einen homogenen Reibwert der beiden Förderbänder 4a, 6a zu gewährleisten ist das Schmiersystem 5 vorgesehen. Das Schmiersystem 5 umfasst den Applikator 5a und die Reibwertmessvorrichtung 5h, die an dem steuerbaren Knickarm 5d des mobilen Roboters 5b angeordnet sind.

Mit dem bodengestützten Fahrwerk 5c ist es möglich, den mobilen Roboter 5b und den daran angeordneten Applikator 5a sowie die Reibwertmessvorrichtung 5h entlang des Bodens B vom ersten Behältertransporteur 4 zum zweiten Behältertransporteur 6 zu verfahren. Ebenso ist denkbar, dass die Transportanlage 1 weitere Behältertransporteure umfasst, zu denen hin der Applikator 5a und die Reibwertmessvorrichtung 5h mittels des mobilen Roboters 5b verfahrbar ist. Des Weiteren ist das bodengestützte Fahrwerk 5c lenkbar ausgebildet, um auch Kurven auf dem Boden B zu fahren.

Ferner ist zu sehen, dass der mobile Roboter 5b für den Applikator 5a und die Reibwertmessvorrichtung 5h den steuerbaren Knickarm 5d umfasst, um den Applikator 5a gegenüber dem ersten und zweiten Behältertransporteur 4, 6 in unterschiedliche Applikationsrichtungen und/oder -positionen R, P zu bewegen. Dadurch kann das Schmiermittel S in verschiedenen Richtungen und Positionen auf die Förderbänder 4a, 6a aufgebracht werden. Der steuerbare Knickarm 5d umfasst steuerbare Gelenke, um die verschiedenen Applikationsrichtungen und/oder -positionen R, P anzufahren.

Der steuerbare Knickarm 5d ist an seiner Basis mit einem kastenartigen Aufbau 5j verbunden, an dessen unteren Ende das bodengestützte Fahrwerk 5c angeordnet ist. In dem Aufbau 5j sind der Versorgungstank 5e mit einem Schmiermittelvorrat und die Förderpumpe 5f zu sehen, mit der das Schmiermittel S aus dem Versorgungstank 5e zum Applikator 5a hin gepumpt werden kann.

Darüber hinaus ist im Aufbau 5j die Steuerungseinheit 5g zu sehen, mit der der Applikator 5a, die nachfolgend beschriebene Reibwertmessvorrichtung 5h, der Knickarm 5d, das bodengestützten Fahrwerk 5c und die Förderpumpe 5f gesteuert werden. Durch ein entsprechendes Programm und Arbeitsanweisungen ist es möglich, dass das Schmiersystem 5 mittels des mobilen Roboters 5b autonom auf dem Boden B, beispielsweise entlang oder entgegen der Fahrtrichtung F fährt und auf den Behältertransporteuren 4, 6 das Schmiermittel S aufbringt.

Des Weiteren ist zu sehen, dass der Applikator 5a eine oder mehrere Düsen umfasst, um das Schmiermittel S auf die Förderbänder 4a, 6a aufzubringen. Der Applikator 5a kann alternativ eine Bürstenschmierung umfassen, die sich aus einer Bürste zum Auftragen auf das Transportband und einer Düse zur Dosierung des Schmiermittels vor dem Auftrag zusammensetzt. Dadurch kann das Schmiermittel S besonders gleichmäßig aufgebracht werden.

Zudem umfasst das Schmiersystem 5 eine am mobilen Roboter 5b angeordnete Reibwertmessvorrichtung 5h, um Reibwerte der Förderbänder 4a, 6a des ersten und zweiten Behältertransporteurs 4, 6 zu bestimmen. Dazu umfasst die Reibwertmessvorrichtung 5h das Kontaktelement 5i, das an dem steuerbaren Knickarm 5d angeordnet ist. Der steuerbare Knickarm 5d ist dazu ausgebildet, das Kontaktelement 5i mit einer vordefinierten Kraft wahlweise gegen die Förderbänder 4a, 6a des ersten und zweiten Behältertransporteurs 4, 6 zu drücken. In der Figur 1 wird gerade das Kontaktelement 5i gegen die Oberseite des Förderbands 4a gedrückt.

Mit dem steuerbaren Knickarm 5d ist es zudem möglich, auf ihn einwirkende Kräfte über Regelströme für die steuerbaren Gelenke zu messen. Folglich kann also die mit dem Kontaktelement 5i senkrecht auf das Förderband 4a einwirkende, vorbestimmte Kraft gemessen werden, die beispielsweise einer Gewichtskraft des Behälters 2 entspricht. Andererseits kann auch die durch die Förderbewegung des Förderbands 4a in der Richtung T wirkende Reibkraft auf das Kontaktelement 5i bestimmt werden. Aus dem Quotienten beider Werte kann dann die Reibkraft bestimmt werden.

Denkbar ist auch, dass die Reibwertmessvorrichtung 5h entsprechende Kraftsensoren umfasst, um die Reibkraft und die Gewichtskraft auf das Kontaktelement 5i zu messen.

Der so erfasste Reibwert des Förderbands 4a des ersten Behältertransporteurs 4 wird anschließend von der Steuerungseinheit 5g mit einem Soll-Reibwert für den Behältertyp der Behälter 2 aus einer Datenbank verglichen. Ist der erfasste Reibwert über einem Soll-Reibwert, beispielsweise über 0,15, so wird mit dem Applikator 5a das Schmiermittel S auf das Förderband 4a aufgebracht.

Anschließend wird der Applikator 5a und die Reibwertmessvorrichtung 5h mit dem mobilen Roboter 5b zum zweiten Behältertransporteur 6 verfahren und dort der Reibwert des Förderbands 6a ermittelt. Ist dieser ebenfalls über dem Soll-Reibwert wird auch hier das Schmiermittel S vom Applikator 5a auf das Förderband 6a aufgebracht.

Denkbar ist zudem, dass mit dem Kontaktelement 5i Reibwerte für die Förderbänder 4a, 6a des ersten Behältertransporteurs 4 und des zweiten Behältertransporteurs 6 abschnittsweise bestimmt werden und abhängig davon das Schmiermittel S durch den Applikator 5a mit abschnittsweise unterschiedlicher Dosierung auf die Förderbänder 4a, 6a aufgebracht wird. Dadurch werden die beiden Förderbänder 4a, 6a besonders homogen geschmiert. Besonders vorteilhaft ist es, quer zur Förderrichtung unterschiedliche Dosierungen zu wählen.

Dadurch, dass der Applikator 5a durch den mobilen Roboter 5b mittels des bodengestützten Fahrwerks 5c automatisiert vom ersten Behältertransporteur 4 zum zweiten Behältertransporteur 6 verfahren wird, kann der Applikator 5a dazu eingesetzt werden, Förderbänder 4a, 6a mehrerer Behältertransporteure 4, 6 zu schmieren. Darüber hinaus kann der mobile Roboter 5b beliebig automatisiert werden, um autonom zu den Behältertransporteuren 4, 6 zu fahren und mit dem daran angeordneten Applikator 5a das Schmiermittel auf die Förderbänder 4a, 6a zu verteilen. Folglich erfordert das Schmiersystem 5 mit dem mobilen Roboter 5b keinen Benutzereingriff, um die Schmierung vorzunehmen und ist damit besonders wenig aufwändig.

Es versteht sich, dass die zuvor in Bezug auf das Ausführungsbeispiel beschriebenen Merkmale nicht auf diese Kombination beschränkt sind, sondern auch einzelnen oder auch in beliebigen anderen Kombinationen möglich sind, sofern diese im Schutzbereich der nachstehenden Ansprüche liegen.

## Patentansprüche

1. Transportanlage (1) für Behälter (2) in der Getränkeindustrie, mit
- einem ersten Behältertransporteur (4), der ein Förderband (4a) zum Transport der Behälter (2) umfasst, und
- mit einem Schmiersystem (5), das einen Applikator (5a) zum Aufbringen eines Schmiermittels (S), insbesondere eines Trockenschmiermittels, auf das Förderband (4a) des ersten Behältertransporteurs (4) umfasst,
wobei die Transportanlage (1) einen zweiten Behältertransporteur (6) mit einem weiteren Förderband (6a) zum Transport der Behälter (2) umfasst, **dadurch gekennzeichnet dass** das Schmiersystem (5) einen mobilen Roboter (5b) mit dem daran angeordneten Applikator (5a) und mit einem bodengestützten Fahrwerk (5c) umfasst, um das Schmiermittel (S) automatisiert wahlweise auf das Förderband (4a) des ersten Behältertransporteurs (4) oder das Förderband (6a) des zweiten Behältertransporteurs (6) aufzubringen.

2. Transportanlage (1) nach Anspruch 1, wobei der mobile Roboter (5b) für den Applikator (5a) einen steuerbaren Knickarm (5d) umfasst, um den Applikator (5a) gegenüber dem ersten und zweiten Behältertransporteur (4, 6) in unterschiedliche Applikationsrichtungen und/oder -positionen (P, R) zu bewegen.

3. Transportanlage (1) nach Anspruch 1 oder 2, wobei der Applikator (5a) wenigstens eine Düse umfasst, um das Schmiermittel (S) auf den Förderbändern (4a, 6a) des ersten und zweiten Behältertransporteurs (4, 6) zu verteilen.

4. Transportanlage (1) nach einem der vorangegangenen Ansprüche, wobei das Schmiersystem (5) einen Versorgungstank (5e) und/oder eine Förderpumpe (5f) für das Schmiermittel (S) umfasst, die am mobilen Roboter (5b) angeordnet sind.

5. Transportanlage (1) nach einem der vorangegangenen Ansprüche, wobei das Schmiersystem (5) eine am mobilen Roboter (5b) angeordnete Reibwertmessvorrichtung (5h) umfasst, um einen Reibwert der Förderbänder (4a, 6a) des ersten und zweiten Behältertransporteurs (4, 6) zu erfassen.

6. Transportanlage (1) nach Anspruch 2 und Anspruch 5, wobei die Reibwertmessvorrichtung (5h) ein Kontaktelement (5i) umfasst, das an dem steuerbaren Knickarm (5d) angeordnet ist, und wobei der steuerbare Knickarm (5d) und/oder die Reibwertmessvorrichtung dazu ausgebildet ist, das Kontaktelement (5i) mit einer vordefinierten Kraft jeweils gegen die Förderbänder (4a, 6a) des ersten und zweiten Behältertransporteurs (4, 6) zu drücken.

7. Transportanlage (1) nach Anspruch 5 oder 6, wobei die Reibwertmessvorrichtung mit einer Datenbank verbunden ist, um Soll-Reibwerte verschiedener Behältertypen abzurufen und/oder um auf Basis von ähnlichen Behältertypen den Soll-Reibwert zu ermitteln.

8. Schmierverfahren für eine Transportanlage (1) für Behälter (2) in der Getränkeindustrie, wobei die Behälter (2) mit einem Förderband (4a) eines ersten Behältertransporteurs (4) transportiert werden, und wobei ein Schmiermittel, insbesondere ein Trockenschmiermittel, mit einem Applikator (5a) auf das Förderband (4a) des ersten Behältertransporteurs (4) aufgebracht wird,
**dadurch gekennzeichnet, dass**
der Applikator (5a) durch einen mobilen Roboter (5b) mittels eines bodengestützten Fahrwerks (5c) automatisiert vom ersten Behältertransporteur (4) zu einem zweiten Behältertransporteur (6) verfahren wird, um das Schmiermittel mit dem Applikator (5a) auf ein Förderband (6a) wenigstens eines zweiten Behältertransporteurs (6) aufzubringen.

9. Schmierverfahren nach Anspruch 8, wobei eine Applikationsrichtung und/oder -position des Applikators (5a) mit einem steuerbaren Knickarm (5d) verändert wird.

10. Schmierverfahren nach Anspruch 9, wobei ein Kontaktelement (5i) einer Reibwertmessvorrichtung (5h) mit einer vordefinierten Kraft gegen das Förderband (4a) des ersten Behältertransporteurs (4) und/oder gegen das Förderband (6a) des zweiten Behältertransporteurs (6) gedrückt wird und damit wenigstens ein Reibwert für den ersten und/oder zweiten Behältertransporteur (4,6) bestimmt wird, und wobei darauf basierend bestimmt wird, ob und/oder wann die Schmierung des ersten und/oder zweiten Behältertransporteurs (4,6) notwendig ist.

11. Schmierverfahren nach Anspruch 10, wobei mit dem Kontaktelement (5i) Reibwerte für das Förderband (4a,6a) des ersten Behältertransporteurs (4) und/oder des zweiten Behältertransporteurs (6) abschnittsweise bestimmt werden, und wobei abhängig davon das Schmiermittel durch den Applikator (5a) mit abschnittsweise unterschiedlicher Dosierung auf das Förderband (4a,6a) des ersten Behältertransporteurs (4) und/oder des zweiten Behältertransporteurs (6) aufgebracht wird.

## Claims

1. Transport system (1) for containers (2) in the beverage industry, with
- a first container conveyor (4) comprising a conveyor belt (4a) for conveying the containers (2), and
- with a lubrication system (5) comprising an applicator (5a) for applying a lubricant (S), in particular a dry lubricant, to the conveyor belt (4a) of the first container conveyor (4),
wherein
the transport system (1) comprises a second container conveyor (6) with a further conveyor belt (6a) for conveying the containers (2), **characterized in**
**that** the lubrication system (5) comprises a mobile robot (5b), which has the applicator (5a) arranged thereon and a floor-supported undercarriage (5c), for applying the lubricant (S) in an automated manner selectively to the conveyor belt (4a) of the first container conveyor (4) or the conveyor belt (6a) of the second container conveyor (6).

2. Transport system (1) according to claim 1, wherein the mobile robot (5b) comprises a controllable articulated arm (5d) for the applicator (5a) so as to move the applicator (5a) relative to the first and second container conveyor (4, 6) in various application directions and/or positions (P, R).

3. Transport system (1) according to claim 1 or 2, wherein the applicator (5a) comprises at least one nozzle for distributing the lubricant (S) on the conveyor belts (4a, 6a) of the first and second container conveyor (4, 6).

4. Transport system (1) according to one of the preceding claims, wherein the lubrication system (5) comprises a storage tank (5e) and/or a feed pump (5f) for the lubricant (S), which are arranged on the mobile robot (5b).

5. Transport system (1) according to one of the preceding claims, wherein the lubrication system (5) comprises a friction coefficient measuring device (5h) arranged on the mobile robot (5b), for ascertaining a friction coefficient of the conveyor belts (4a, 6a) of the first and second container conveyors (4, 6).

6. Transport system (1) according to claim 2 and claim 5, wherein the friction coefficient measuring device (5h) comprises a contact element (5i) arranged on the controllable articulated arm (5d) and wherein the controllable articulated arm (5d) and/or the friction coefficient measuring device is configured to press the contact element (5i) with a predetermined force against the respective conveyor belts (4a, 6a) of the first and second container conveyor (4, 6).

7. Transport system (1) according to claim 5 or 6, wherein the friction coefficient measuring device is connected to a database for retrieving nominal friction coefficients of different container types and/or for determining the nominal friction coefficient on the basis of similar container types.

8. Lubrication method for a transport system (1) for containers (2) in the beverage industry, wherein the containers (2) are conveyed with a conveyor belt (4a) of a first container conveyor (4), and wherein a lubricant, in particular a dry lubricant, is applied to the conveyor belt (4a) of the first container conveyor (4) by means of an applicator (5a),
**characterized in that**
by means of a floor-supported undercarriage (5c), the applicator (5a) is moved in an automated manner from the first container conveyor (4) to a second container conveyor (6) through a mobile robot (5b), so as to apply the lubricant by the applicator (5a) to a conveyor belt (6a) of at least a second container conveyor (6).

9. Lubrication method according to claim 8, wherein an application direction and/or position of the applicator (5a) is changed by a controllable articulated arm (5d).

10. Lubrication method according to claim 9, wherein a contact element (5i) of a friction coefficient measuring device (5h) is pressed against the conveyor belt (4a) of the first container conveyor (4) and/or against the conveyor belt (6a) of the second container conveyor (6) with a predetermined force, and at least one friction coefficient for the first and/or second container conveyor (4,6) is determined in this way, and wherein it is determined on the basis of this whether and/or when lubrication of the first and/or second container conveyor (4,6) will be necessary.

11. Lubrication method according to claim 10, wherein friction coefficients for the conveyor belt (4a, 6a) of the first container conveyor (4) and/or the second container conveyor (6) are determined sectionwise with the contact element (5i), and wherein, depending thereon, the lubricant is applied to the conveyor belt (4a, 6a) of the first container conveyor (4) and/or the second container conveyor (6) by the applicator (5a) with dosages varying from one section to the next.

## Revendications

1. Installation de transport (1) de récipients (2) pour l'industrie des boissons, comprenant
- un premier transporteur de récipients (4) comportant un convoyeur à bande (4a) pour transporter les récipients (2), et
- un système de lubrification (5) comportant un applicateur (5a) pour appliquer un lubrifiant (S), en particulier un lubrifiant sec, sur le convoyeur à bande (4a) du premier transporteur de récipients (4),
dans laquelle l'installation de transport (1) comprend un deuxième transporteur de récipients (6) avec un autre convoyeur à bande (6a) pour transporter les récipients (2),
**caractérisée en ce que** le système de lubrification (5) comprend un robot mobile (5b) sur lequel est agencé l'applicateur (5a) et avec un châssis posé au sol (5c), afin d'appliquer sélectivement et automatiquement le lubrifiant (S) sur le convoyeur à bande (4a) du premier transporteur de récipients (4) ou sur le convoyeur à bande (6a) du deuxième transporteur de récipients (6).

2. Installation de transport (1) selon la revendication 1, dans laquelle le robot mobile (5b) de l'applicateur (5a) comporte un bras articulé contrôlable (5d) pour déplacer l'applicateur (5a) dans différentes directions et/ou positions d'application (P, R) par rapport aux premier et deuxième transporteurs de récipients (4, 6).

3. Installation de transport (1) selon la revendication 1 ou 2, dans laquelle l'applicateur (5a) comporte au moins une buse pour distribuer le lubrifiant (S) sur les convoyeurs à bande (4a, 6a) des premier et deuxième transporteurs de récipients (4, 6).

4. Installation de transport (1) selon l'une des revendications précédentes, dans laquelle le système de lubrification (5) comprend un réservoir d'alimentation (5e) et/ou une pompe d'alimentation (5f) pour le lubrifiant (S), qui sont agencés sur le robot mobile (5b).

5. Installation de transport (1) selon l'une des revendications précédentes, dans laquelle le système de lubrification (5) comprend un dispositif de mesure de valeur de frottement (5h) agencé sur le robot mobile (5b) afin de mesurer une valeur de frottement des convoyeurs à bande (4a, 6a) des premier et deuxième transporteurs de récipients (4, 6) .

6. Installation de transport (1) selon la revendication 2 ou 5, dans laquelle le dispositif de mesure de valeur de frottement (5h) comprend un élément de contact (5i) qui est agencé sur le bras articulé contrôlable (5d), et dans laquelle le bras articulé contrôlable (5d) et/ou le dispositif de mesure de valeur de frottement sont conçus pour contraindre l'élément de contact (5i) avec une force prédéfinie contre les convoyeurs à bande (4a, 6a) respectifs des premier et deuxième transporteurs de récipients (4, 6).

7. Installation de transport (1) selon la revendication 5 ou 6, dans laquelle le dispositif de mesure de valeur de frottement est connecté à une base de données afin de consulter des valeurs de frottement nominales pour différents types de récipients et/ou de déterminer la valeur de frottement nominale sur la base de types de récipients similaires.

8. Procédé de lubrification d'une installation de transport (1) de récipients (2) pour l'industrie des boissons, dans lequel les récipients (2) sont transportés par un convoyeur à bande (4a) d'un premier transporteur de récipients (4), et dans lequel un lubrifiant, en particulier un lubrifiant sec, est appliqué sur le convoyeur à bande (4a) du premier transporteur de récipients (4) par un applicateur (5a),
**caractérisé en ce que** l'applicateur (5a) est déplacé automatiquement du premier transporteur de récipients (4) vers un deuxième transporteur de récipients (6) par un robot mobile (5b) à l'aide d'un châssis posé au sol (5c) afin d'appliquer le lubrifiant avec l'applicateur (5a) sur le convoyeur à bande (6a) d'au moins un deuxième transporteur de récipients (6).

9. Procédé de lubrification selon la revendication 8, dans lequel une direction et/ou une position d'application de l'applicateur (5a) est modifiée à l'aide d'un bras articulé contrôlable (5d).

10. Procédé de lubrification selon la revendication 9, dans lequel un élément de contact (5i) d'un dispositif de mesure de valeur de frottement (5h) est contraint avec une force prédéfinie contre le convoyeur à bande (4a) du premier transporteur de récipients (4) et/ou contre le convoyeur à bande (6a) du deuxième transporteur de récipients (6), moyennant quoi au moins une valeur de frottement est déterminée pour le premier et/ou le deuxième transporteur de récipients (4, 6), et dans lequel il est ainsi déterminé si et/ou quand la lubrification du premier et/ou du deuxième transporteur de récipients (4, 6) est nécessaire.

11. Procédé de lubrification selon la revendication 10, dans lequel, avec l'élément de contact (5i), des valeurs de frottement pour le convoyeur à bande (4a, 6a) du premier transporteur de récipients (4) et/ou du deuxième transporteur de récipients (6) sont déterminées par sections, et dans lequel, en fonction de cela, le lubrifiant est appliqué sur le convoyeur à bande (4a, 6a) du premier transporteur de récipients (4) et/ou du deuxième transporteur de récipients (6) par l'applicateur (5a) avec différents dosages en fonction de la section.
